(19) Europäisches Patentamt
European Patent Office
Office européen des brevets

(11) EP 2 993 499 B1

(12) # EUROPEAN PATENT SPECIFICATION

(45) Date of publication and mention of the grant of the patent:
**05.09.2018 Bulletin 2018/36**

(21) Application number: **14791018.6**

(22) Date of filing: **25.04.2014**

(51) Int Cl.:
***G02B 6/44*** (2006.01) ***G02B 6/02*** (2006.01)
***B29D 11/00*** (2006.01)

(86) International application number:
**PCT/JP2014/061717**

(87) International publication number:
**WO 2014/178347 (06.11.2014 Gazette 2014/45)**

(54) **PLASTIC OPTICAL FIBER, METHOD FOR MANUFACTURING SAME, SENSOR, AND BOBBIN FOR WINDING PLASTIC OPTICAL FIBER**

OPTISCHE KUNSTSTOFFFASER, VERFAHREN ZUR HERSTELLUNG DAVON, SENSOR UND SPULE ZUM AUFWICKELN VON OPTISCHEN FASERN

FIBRE OPTIQUE EN PLASTIQUE, PROCÉDÉ DE FABRICATION DE CELLE-CI, CAPTEUR, ET UNE BOBINE POUR ENROULER UNE FIBRE OPTIQUE EN PLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.05.2013 JP 2013096691**

(43) Date of publication of application:
**09.03.2016 Bulletin 2016/10**

(73) Proprietor: **Mitsubishi Chemical Corporation**
**Tokyo 100-8251 (JP)**

(72) Inventors:
- **KIHARA, Hideki**
  **Toyama-shi**
  **Toyama 931-8601 (JP)**
- **TSUKAMOTO, Yoshihiro**
  **Toyama-shi**
  **Toyama 931-8601 (JP)**

(74) Representative: **TBK**
**Bavariaring 4-6**
**80336 München (DE)**

(56) References cited:
**WO-A1-00/39614**
**WO-A1-2009/157444**
**JP-A- H02 208 610**
**JP-A- S63 311 305**
**JP-A- 2000 247 547**
**JP-A- 2002 316 773**
**JP-A- 2004 083 238**
**JP-A- 2005 099 447**
**JP-A- 2005 292 180**
**JP-A- 2006 058 774**
**JP-A- 2006 084 712**
**JP-A- 2006 178 220**
**JP-A- 2007 031 115**
**JP-A- 2009 237 571**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 993 499 B1

## Description

Field of the Invention

The present invention relates to a plastic optical fiber and its manufacturing method, a sensor using the plastic optical fiber, and a bobbin for winding a plastic optical fiber.

Background Art

Plastic optical fibers are being used as high-speed optical signal transmission lines in various applications such as local area networks (LANs), factory automation (FA) and office automation (OA). Among plastic optical fibers used as high-speed optical signal transmission lines as above, plastic optical fibers that use a poly(methyl methacrylate) (PMMA) homopolymer for their core material have low-loss windows in visible-light regions, and their transmission loss near 520 nm, 570 nm and 650 nm is low. Considering the balance of the life span of elements, bandwidths, wavelength characteristics of light receiver elements, price, versatility and the like, red light (650 nm) is used for plastic optical fibers.
However, since the transmission loss of red light (650 nm) is greater, red light is not suitable for use in long-distance communication.
Thus, when plastic optical fibers are used in applications that require long-distance communication capability, for example, sensors in entry barrier fences at airports, warehouses, etc.; solar panels; theft prevention sensors for shop displays; security cameras; and so forth, green light (at around 525 nm or 570 nm) is used because its transmission loss is less than that of red light (650 nm).
Meanwhile, to improve the properties of plastic optical fibers, various methods have been proposed. For example, Patent Publication 1 proposes a method for crystallizing cladding material of a plastic optical fiber by conducting hot-wet treatment. When cladding material is crystallized, the degree of light scattering increases significantly at the interface of the core and cladding of the plastic optical fiber, thereby causing light to leak from side surfaces of the plastic optical fiber. In addition, Patent Publications 2 and 3 each propose a method for suppressing thermal contraction by conducting thermal treatment on plastic optical fibers.

PRIOR ART PUBLICATION

PATENT PUBLICATION

Patent Publication 1: JP H06-118236A
Patent Publication 2: JP2001-228343A
Patent Publication 3: JP2005-99447A

Further, US 2007/205526 A1 discloses a production of a plastic optical fiber.
JP 2006 178220 A discloses a plastic optical fiber cable which is produced through a plurality of production processes.
JP H02 208610 A discloses a plastic optical fiber cord having ≤2% difference in the shrinkage rate between the coated fiber and the coating layer.
JP S63 311305 A discloses subjecting a plastic optical fiber to a wet heat treatment to increase the moisture content of the plastic constituting the core to the content higher than the equilibrium moisture content thereof.
JP 2006 058774 A discloses a plastic optical fiber cable. A GI type core wire is arranged with a large number of aramid fibers on the outer circumference and covered with polyvinyl chloride to form the outermost layer, so that the plastic optical fiber cable is obtained. The optical fiber cable is annealed at 60°C for 17 hours.

SUMMARY OF THE INVENTION

PROBLEMS TO BE SOLVED BY THE INVENTION

However, the method described in Patent Publication 1 conducts hot-wet treatment on a plastic optical fiber at a high temperature of 60°C or higher. Thus, transmission loss in the obtained plastic optical fiber increases due to thermal deterioration or light that scatters through crystallized cladding material. Also, when methods in Patent Publications 2 and 3 are used, thermal contraction is suppressed but thermal treatment at a high temperature of 80°C or higher causes thermal deterioration and a subsequent increase in transmission loss in the plastic optical fiber.

Especially, an increase in transmission loss of green light (at around 525 nm or 570 nm) used for long-distance communication results in restricting transmission distance and limits applicable usage of the plastic optical fiber.

In response to the above problems, the objective of the present invention is to provide a plastic optical fiber and its manufacturing method so as to reduce transmission loss and extend transmission distance even farther.

SOLUTIONS TO THE PROBLEMS

An aspect of the present invention provides a method for manufacturing a plastic optical fiber that includes a step for conducting hot-wet treatment at a relative humidity of 35~100%, or hot water treatment, on a plastic optical fiber under conditions of a processing temperature within a range of 30~56°C and a processing time within a range of 5~5000 hours.

Another aspect of the present invention provides a plastic optical fiber obtained by the above manufacturing method.

Yet another aspect of the present invention provides a plastic optical fiber obtained by the above manufacturing method and where the transmission loss is 115 dB/km or lower when measured using a 25 m-1 m cutback method under conditions of a wavelength of 525 nm and excitation NA=0.45.

Yet another aspect of the present invention provides a plastic optical fiber obtained by the above manufacturing method and where the transmission loss is 100 dB/km or lower when measured using a 25 m-1 m cutback method under conditions of a wavelength of 525 nm and excitation NA=0.45.

Yet another aspect of the present invention provides a sensor that uses either one of the aforementioned plastic optical fibers.

EFFECTS OF THE INVENTION

According to the embodiments of the present invention, a plastic optical fiber is provided that is capable of reducing transmission loss and extending transmission distance even farther, and its manufacturing method is also provided.

BRIEF DESCRIPTION OF THE DRAWINGS

Fig. 1 schematically shows examples of the cross-sectional structure of a multilayer plastic optical fiber according to embodiments of the present invention;

Fig. 2 schematically shows views of a bobbin for winding a plastic optical fiber according to another embodiment of the present invention;

Fig. 3 schematically shows views of a bobbin for winding a plastic optical fiber according to yet another embodiment of the present invention; and

Fig. 4 schematically shows views of a bobbin for winding a plastic optical fiber according to yet another embodiment of the present invention.

DETAILED DESCRIPTION OF THE EMBODIMENTS

According to an embodiment of the present invention, a method for manufacturing a plastic optical fiber includes a step for conducting hot-wet treatment at a relative humidity of 35~100%RH, or hot water treatment, on a plastic optical fiber under conditions of a processing temperature within a range of 30~56°C and a processing time within a range of 5~5000 hours. The hot-wet treatment is preferred to be conducted in the processing step. In addition, the method is preferred to include a drying step after the processing step.

The plastic optical fiber manufactured according to an embodiment of the present invention is preferred to have a diameter of 0.6 mm or greater.

The plastic optical fiber manufactured according to an embodiment of the present invention is preferred to have a core and at least one layer of cladding that surrounds the periphery of the core. Preferably, the material for the core is acrylic resin, and the material for the cladding is fluororesin.

More preferably, the plastic optical fiber has two or more layers of cladding, the material for the innermost cladding layer that surrounds the periphery of the core is fluororesin containing a fluoroalkyl (meth)acrylate unit, and the material for the outer cladding layer that surrounds the periphery of the innermost layer is fluororesin containing a vinylidene fluoride unit.

In a manufacturing method according to an embodiment of the present invention, the processing step for

conducting a hot-wet treatment or hot water treatment is preferred to be performed on a plastic optical fiber that is wound on a bobbin. The bobbin is preferred to have a hole in the barrel or flange portion. Transmission loss is reduced even more effectively by processing a plastic optical fiber that is wound on such a bobbin.

A plastic optical fiber according to an embodiment of the present invention is obtained by the above method. The plastic optical fiber is preferred to show a reduction rate of 5% or greater in the levels of transmission loss when measured before and after the processing step of hot-wet treatment or hot water treatment, using a 25 m-1 m cutback method under conditions of a wavelength of 525 nm and excitation NA=0.45.

When measured using a 25 m-1 m cutback method under conditions of a wavelength of 525 nm and excitation NA=0.45, the transmission loss in the plastic optical fiber according to an embodiment of the present invention is 115 dB/km or lower, more preferably, 100 dB/km or lower.

Plastic optical fibers according to the embodiments of the present invention are capable of reducing transmission loss, especially transmission loss near 525 nm, so as to extend long-distance communication even farther.

A sensor according to an embodiment of the present invention uses any of the plastic optical fibers mentioned above, and is suitable for use as a sensor installed on an entry barrier fence or as a theft prevention sensor.

In the following, embodiments of the present invention are described with reference to the accompanying drawings. However, the present invention is not limited to the structures shown in the drawings.

(Plastic Optical Fiber)

The plastic optical fiber according to an embodiment of the present invention may be any of various plastic optical fiber types.

Examples of a plastic optical fiber are graded-index plastic optical fibers where the refractive index decreases continuously from the center toward the periphery (GI type plastic optical fibers), multilayer step-index plastic optical fibers where the refractive index decreases intermittently from the center toward the periphery (SI type plastic optical fibers), and multicore plastic optical fibers where multiple cores are surrounded by cladding to be integrated. Among them, multilayer plastic optical fibers are preferred since they are inexpensive with a simple structure, exhibit high production yield, and reduce transmission loss.

A multilayer plastic optical fiber has a core and at least one layer of cladding that surrounds the periphery of the core. Such a multilayer plastic optical fiber is capable of achieving total reflection on the interface of the core and the cladding, thus propagating light inside the core.

Fig. 1 shows examples of the cross-sectional structure of a multilayer plastic optical fiber. Fig. 1(a) shows a plastic optical fiber having one layer of cladding; cladding **12** surrounds the periphery of core **11.** Fig. 1(b) shows a plastic optical fiber having two layers of cladding; the first cladding layer **12a** (innermost layer) surrounds the periphery of core **11** and the second cladding layer **12b** (outer layer) surrounds the periphery of cladding layer **12a.**

(Core)

The material for the core (core material) is not limited to a specific resin as long as it has high transparency properties, and is properly selected according to usage purposes.

Resins with high transparency properties are acrylic resins, styrene resins, carbonate resins and the like. Those highly transparent resins may be used alone or in combination thereof. Among those polymers with highly transparent properties, acrylic resins are preferred because they are capable of reducing transmission loss.

Examples of acrylic resins are poly(methyl methacrylate) (PMMA) homopolymers and copolymers containing a methyl methacrylate unit at 50 mass% or greater. Such acrylic resins may be used alone or in combination thereof. Among them, methyl methacrylate homopolymers and copolymers containing a methyl methacrylate unit at 50 mass% or greater (methyl methacrylate copolymers) are preferred because of their excellent optical properties, mechanical strength, heat resistance and transparency. Considering their excellent optical properties, mechanical strength, heat resistance and transparency, preferred methyl methacrylate copolymers are those containing a methyl methacrylate unit at 60 mass% or greater, more preferably containing a methyl methacrylate unit at 70 mass% or greater. Methyl methacrylate homopolymers are especially preferred as core material.

In the present application, the term "(meth)acrylate" indicates "acrylate," "methacrylate" or both.

Any known polymerization method is employed for manufacturing core material. To manufacture core material, methods such as bulk polymerization, suspension polymerization, emulsion polymerization and solution polymerization may be used. Among them, bulk polymerization and solution polymerization are preferred since the mixing in of contaminants is prevented.

(Cladding)

At least one layer of cladding is formed on the periphery of a core. A cladding may be single-layered as shown in Fig. 1(a), or it may be formed with two or more layers as shown in Fig. 1(b).

The material for a cladding (cladding material) is not limited to any specific material as long as its refractive index is lower than that of the core material, and as long as the material is properly selected based on the composition of the core material and usage purposes.

When acrylic resin is used as the core material, it is preferred that fluororesin be used as the cladding material to achieve a reduction in transmission loss. Especially when a methyl methacrylate homopolymer or a copolymer containing a methyl methacrylate unit at 50 mass% or greater is used as the core material, fluororesin is preferred to be used as the cladding material to achieve a reduction in transmission loss.

Examples of fluororesin are vinylidene fluoride (VDF) homopolymers, VDF/tetrafluoroethylene (TFE) copolymers, VDF/TFE/hexafluoropropylene (HFP) copolymers, VDF/TFE/HFP/(perfluoro)alkyl vinyl ether copolymers, VDF/hexafluoroacetone copolymers, VDF/HFP copolymers, VDF/TFE/hexafluoroacetone copolymers, ethylene/VDF/TFE/HFP copolymers, ethylene/TFE/HFP copolymers, VDF/trifluoroethylene copolymers, fluoroalkyl (meth)acrylate polymers, fluoroalkyl (meth)acrylate/alkyl (meth)acrylate copolymers, and the like. Those listed above may be used alone or in combination thereof. Among those fluororesins, considering their low cost and excellent properties such as flexibility, impact resistance, transparency and chemical resistance, it is preferred to use VDF/TFE copolymers, VDF/TFE/HFP copolymers, ethylene/VDF/TFE/HFP copolymers, ethylene/TFE/HFP copolymers,fluoroalkyl (meth)acrylate polymers or fluoroalkyl (meth)acrylate/alkyl (meth)acrylate copolymers.

Especially, when the cladding is single-layered, the cladding material is preferred to be selected from among VDF/TFE copolymers, VDF/TFE/HFP copolymers, ethylene/VDF/TFE/HFP copolymers, ethylene/TFE/HFP copolymers, fluoroalkyl (meth)acrylate polymers, and fluoroalkyl (meth)acrylate/alkyl (meth)acrylate copolymers, more preferably, VDF/TFE copolymers, VDF/TFE/HFP copolymers, ethylene/VDF/TFE/HFP copolymers and ethylene/TFE/HFP copolymers, considering their excellent solution resistance properties.

When the cladding is formed with two or more layers, the material for the innermost cladding layer surrounding the periphery of the core (the first cladding layer, corresponding to inner cladding layer **12a** in Fig. 1(b)) is preferred to be made of a fluororesin containing a fluoroalkyl (meth)acrylate unit such as a fluoroalkyl (meth)acrylate polymer or a fluoroalkyl (meth)acrylate/alkyl (meth)acrylate copolymer. For the material for the outer cladding layer surrounding the periphery of the innermost cladding layer (the second or subsequent outer cladding layer, corresponding to outer cladding layer **12b** in Fig. 1(b)), it is preferred to be selected from among fluororesins containing a VDF unit, more preferably, VDF/TFE copolymers, VDF/TFE/HFP copolymers, ethylene/VDF/TFE/HFP copolymers and ethylene/TFE/HFP copolymers, even more preferably, VDF/TFE copolymers and VDF/TFE/HFP copolymers.

Examples of fluoroalkyl (meth)acrylates are, for example, long-chain fluoroalkyl (meth)acrylates represented by formula (1) below, 2-(perfluorohexyl)ethyl methacrylate (13FM), 2-(perfluorooctyl)ethyl methacrylate (17FM) and the like; short-chain fluoroalkyl (meth)acrylates represented by formula (2) below, such as 2,2,2-trifluoroethyl methacrylate (3FM); and the like.

[chemical formula 1]

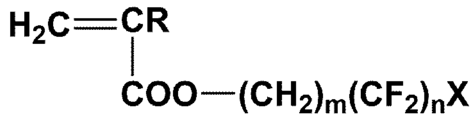

(1)

(in the formula, "R" is a hydrogen atom or a methyl group, "X" is a hydrogen atom or a fluorine atom, "m" is 1 or 2, and "n" is a whole number of 5~13)

[chemical formula 2]

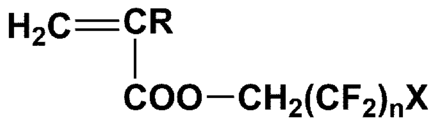

(2)

(in the formula, "R" is a hydrogen atom or a methyl group, "X" is a hydrogen atom or a fluorine atom, and "n" is a whole number of 1~4)

Since fluoroalkyl (meth)acrylate polymers or fluoroalkyl (meth)acrylate /alkyl(meth)acrylate copolymers are capable of reducing transmission loss, it is preferred to use a copolymer formed to have a composition ratio of 10~50

mass% of a long-chain fluoroalkyl (meth)acrylate unit represented by formula (3) below, 20~90 mass% of a short-chain fluoroalkyl (meth)acrylate unit represented by formula (4) below and 0~50 mass% of a copolymerizable monomer unit. More specifically, a 17FM/3FM/methyl methacrylate (MMA)/methacrylic acid (MAA) copolymer or 13FM/3FM/methyl methacrylate (MMA)/methacrylic acid (MAA) copolymer, prepared to have the above specified composition ratio, is preferred.

[chemical formula 3]

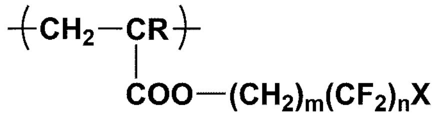

(3)

(in the formula, "R" is a hydrogen atom or a methyl group, "X" is a hydrogen atom or a fluorine atom, "m" is 1 or 2, and "n" is a whole number of 5~13)

[chemical formula 4]

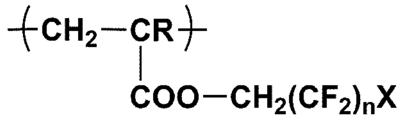

(4)

(in the formula, "R" is a hydrogen atom or a methyl group, "X" is a hydrogen atom or a fluorine atom, and "n" is a whole number of 1~4)

Any known molding method, for example, a melt-spinning method, may be employed to mold plastic optical fibers.

Plastic optical fibers are molded by a melt-spinning method, for example, by melting core material and cladding material and performing conjugate spinning.

The diameter of a plastic optical fiber is preferred to be in a range of 0.1~5 mm, more preferably 0.2~4.5 mm, even more preferably 0.3~4 mm, especially preferably 0.6~4 mm, because such diameters lead to a reduction in transmission loss and ease of handling plastic optical fibers.

The diameter of the core in a plastic optical fiber is preferred to be in a range of 85~99.9%, more preferably 90~99.8%, even more preferably 95~99.7% of the diameter of the plastic optical fiber, considering the efficiency of coupling with optical elements and tolerance to misalignment with the optical axis.

The thickness of a cladding in a plastic optical fiber is preferred to be in a range of 0.1~15%, more preferably 0.2~10%, even more preferably 0.3~5% of the diameter of the plastic optical fiber, considering the efficiency of coupling with optical elements and tolerance to misalignment with the optical axis.

When the cladding is formed with two or more layers, its thickness is set properly by adjusting the thickness of the innermost layer surrounding the periphery of the core (the first cladding layer, corresponding to inner cladding layer **12a** in Fig. 1(b)) and the thickness of the outer layer surrounding the periphery of the innermost layer (the second or subsequent outer cladding layer, corresponding to outer cladding layer **12b** in Fig. 1(b)).

When the cladding is formed with two or more layers, the ratio of the thickness of the second cladding layer (or the second or subsequent outer cladding layers) to the thickness of the first cladding layer (innermost layer) is preferred to be in a range of 0.5~5, more preferably 1~4, even more preferably 1.2~3, from the viewpoint of reducing transmission loss.

The refractive indices of the core material and cladding material are not limited specifically as long as the refractive index of the core material is lower than that of the cladding material. From the viewpoint of reducing transmission loss, the refractive index of the core material is preferred to be 1.45~1.55 while the refractive index of the cladding material is 1.35~1.45. It is more preferred if the refractive index of the core material is set at 1.46~1.53 and the refractive index of the cladding material at 1.37~1.44, even more preferable if the refractive index of the core material is set at 1.47~1.51 and the refractive index of the cladding material at 1.39~1.43.

In the present application, refractive indices are measured at 25°C using the sodium D-lines.

(Processing Method for plastic optical fiber)

The method for manufacturing a plastic optical fiber according to an embodiment of the present invention includes a step for conducting hot-wet treatment or hot water treatment under the following conditions.

(Processing Temperature and Processing Time)

Hot-wet treatment or hot water treatment is conducted under conditions of a processing temperature of 15~57°C for 5~5000 hours.

The processing temperature is set in a range of 30~56°C, more preferably 40~55°C. Thus, transmission loss, especially transmission loss around 525 nm, is reduced. Also, an increase in transmission loss caused by thermal deterioration of plastic optical fibers is suppressed. During the process, the processing temperature is preferred to be maintained at a constant level, preferably within ±5°C, more preferably within ±3°C, even more preferably within ±1°C.

The relative humidity during hot-wet treatment is set in a range of 35~100%RH, preferably 36~100%RH, more preferably 38~100%RH. If the relative humidity of hot-wet treatment is 35%RH or higher, a reduction in transmission loss, especially transmission loss at around 525 nm, is achieved.

The processing time is set in a range of 5~5000 hours, preferably 7~3000 hours, more preferably 10~1000 hours. If the processing time is 5 hours or longer, a reduction in transmission loss, especially transmission loss at around 525 nm, is achieved. Also, if the processing time is 5000 hours or shorter, productivity of plastic optical fibers is excellent.

A method for conducting hot-wet treatment is not limited specifically as long as temperature, relative humidity and time are set as above: for example, a plastic optical fiber is processed in an oven or the like installed in the plastic optical fiber production line; a plastic optical fiber is processed in an oven or the like after the plastic optical fiber is wound around a bobbin to apply tension; and so on.

A method for conducting hot water treatment is not limited specifically as long as temperature and time are set as above: for example, a plastic optical fiber is processed in a water tank or the like installed in the plastic optical fiber production line; a plastic optical fiber is processed in a water tank or the like after the plastic optical fiber is wound around a bobbin to apply tension; and so on. When conducting hot water treatment, it is preferred for plastic optical fibers to have direct contact with water which is controlled in the aforementioned temperature range

In the present application, hot water indicates such water that is controlled to have the aforementioned temperature range (30~56°C).

(Drying)

In the method for manufacturing plastic optical fibers according to an embodiment of the present invention, plastic optical fibers may be dried after hot-wet treatment or hot water treatment.

The temperature for drying plastic optical fibers is preferred to be in a range of 20~80°C, more preferably 25~57°C, even more preferably 30~55°C. If the temperature for drying is 20°C or higher, plastic optical fibers are dried more efficiently, and transmission loss, especially transmission loss at around 525 nm, is effectively reduced. If the temperature for drying is 80°C or lower, an increase in transmission loss caused by thermal deterioration of plastic optical fibers is suppressed. The drying time is preferred to be in a range of 1~5000 hours, more preferably 1~1000 hours, even more preferably 1-200 hours. If the drying time is one hour or longer, plastic optical fibers are dried well, and if the drying time is 5000 hours or shorter, it is efficient from the viewpoint of energy costs and productivity. The relative humidity while drying plastic optical fibers is preferred to be 34%RH or lower (namely, in a range of 0~34%RH), more preferably 25%RH or lower (namely, in a range of 0~25%RH), even more preferably 15%RH or lower (namely, in a range of 0~15%RH). If the relative humidity during the drying process is 34%RH or lower, plastic optical fibers are dried efficiently.

(Method for Collecting Plastic Optical Fibers)

After plastic optical fibers are manufactured, they are generally wound onto a bobbin or the like for storing or shipping convenience.

As for the shape of a bobbin, a bobbin may have a cylindrical barrel and a circular flange on each of both ends of the barrel, and the diameter of the flanges is greater than the diameter of the cylindrical barrel. Particular examples are the bobbins shown in Figs. 2-4. The bobbin shown in Fig. 2 has circular holes in the barrel, the bobbin shown in Fig. 3 has rectangular holes in the barrel, and the bobbin shown in Fig. 4 shows fan-shaped holes in the flanges.

The holes in the barrel are not limited to being circular, but may be rectangular shapes such as squares and rectangles, or polygonal or irregular shapes. Multiple holes are formed in a bobbin as long as the bobbin can maintain sufficient strength to prevent its deformation. The opening size of holes may be set properly. To uniformly process the wound plastic optical fibers, multiple holes may be arranged at regular intervals on the entire barrel or periodically along the periphery of the barrel, or a pattern made of multiple holes may be arranged at regular intervals or periodically on the barrel. For example, a pattern made of multiple holes (a group of holes arrayed at an equal pitch) may be positioned at regular intervals along the periphery of the barrel as shown in Fig. 2(a). Also, long holes extending from one flange toward the other flange may be arranged at equal intervals along the periphery of the barrel as shown in Fig. 3.

The holes formed in the flanges are not limited to a fan shape, but may be rectangular shapes such as squares

and rectangles, polygonal shapes, circular shapes or irregular shapes. Multiple holes are formed in a bobbin as long as the bobbin can maintain sufficient strength to prevent its deformation. The opening size of holes may be set properly. To uniformly process wound plastic optical fibers, holes may be arranged at regular intervals (for example, as shown in Figs. 4(a) and (c)), or periodically along the periphery of the barrel.

The diameter of the barrel of a bobbin is not limited specifically as long as a desired length of a plastic optical fiber is wound on the bobbin. It is preferred to be in a range of 80-400 mm, more preferably 100~350 mm, and even more preferably 120~300 mm.

The diameter of a flange of a bobbin is not limited specifically as long as a desired length of a plastic optical fiber is totally wound. It is preferred to be in a range of 150~600 mm, more preferably 170~500 mm, and even more preferably 200~400 mm.

The length of the barrel of a bobbin (the length between flanges) is preferred to be in a range of 20-540 mm, more preferably 45-450 mm, even more preferably 70-360 mm.

When a plastic optical fiber is wound on a bobbin and undergoes hot-wet treatment or hot water treatment, the bobbin is preferred to have the aforementioned holes to reduce transmission loss, especially transmission loss at around 525 nm, during hot-wet treatment or hot water treatment.

Holes may be formed only in the barrel, only in the flanges or both in the barrel and in the flanges. The shapes of the holes may be circular, elliptical, fanlike, polygonal, irregular or the like, for example.

When plastic optical fibers undergo hot-wet treatment or hot water treatment by being wound on a bobbin, the material of the bobbin is not limited specifically as long as it does not deform during hot-wet treatment or hot water treatment. Examples of bobbin material are wood, metal and plastic. Among them, plastic is preferred because of the ease of handling.

Examples of plastic to be used for a bobbin are olefin resins such as polyethylene, polypropylene and cyclic polyolefin; styrene resins such as polystyrene, acrylonitrile/butadiene/styrene copolymers, acrylonitrile/styrene copolymers and methacrylate/butadiene/styrene copolymers; acrylic resins; carbonate resins; vinyl chloride resins; vinyl acetate resins; amide resins such as polyamide and polyamide-imide; polyacetals, modified polyphenylene ethers, polyesters, polyphenylene sulfides, polytetrafluoroethylenes, polysulfones, polyether sulfones, amorphous polyarylates, polyether ether ketones, and the like.

The length of a plastic optical fiber to be wound on a bobbin or the like (winding length) is preferred to be in a range of 100~100,000 m, more preferably 200~80,000 m, even more preferably 300~50,000 m. If the winding length is 100 m or longer, it will be sufficient for the plastic optical fiber to be made into a cable or the like. Also, if the winding length is 100,000 m or shorter, hot-wet treatment or hot water treatment of the plastic optical fiber wound on a bobbin can be conducted well, and transmission loss, especially loss at around 525 nm, is effectively reduced.

The tension to be applied on a plastic optical fiber when it is wound on a bobbin is preferred to be in a range of 20~1500 gf (0.196~14.7 N), more preferably 30~1400 gf (0.294~13.7 N), even more preferably 40~1200 gf (0.392~11.8 N). Tension applied at 20 gf (0.196 N) or greater can suppress problems such as entanglement of the wound plastic optical fiber when the plastic optical fiber becomes loose during transportation, or defects such as knots and cuts when formed into a cable. Also, tension applied at 1500 gf (14.7 N) or lower can suppress an increase in transmission loss that occurs when an upper portion of the plastic optical fiber intersects and crosses over a lower portion of the plastic optical fiber and when the upper portion is bent on the intersected portion.

When measured before and after hot-wet treatment or hot water treatment, using a 25 m-1 m cutback method under conditions of a wavelength of 525 nm and excitation NA=0.45, the plastic optical fiber according to an embodiment of the present invention is preferred to show a reduction rate of 5% or greater, more preferably 10% or greater, even more preferably 15% or greater, in the levels of transmission loss.

In the present application, measurement using a 25 m-1 m cutback method is conducted in compliance with "JIS C 6823:2010" specified by Japan Industrial Standards. More specifically, a 25 m plastic optical fiber is set in a measuring device, output power (P2) is measured, the plastic optical fiber is cut to a cutback length (1 m from the end where light enters), and output power (P1) is measured to determine optical transmission loss by using mathematical formula (1) below.

[mathematical formula]

$$\text{transmission loss (dB/km)} = \frac{10 \times \log(P1/P2)}{0.025 - 0.001} \quad (1)$$

Regarding the plastic optical fiber according to an embodiment of the present invention, its transmission loss at around 525 nm is preferred to show a reduction rate of 5% or greater in the levels of transmission loss before and after hot-wet treatment or hot water treatment. To achieve such effects more efficiently, the plastic optical fiber is preferred to be obtained by the manufacturing method according to an embodiment of the present invention.

When measured using a 25 m-1 m cutback method under conditions of a wavelength of 525 nm and excitation NA=0.45, transmission loss in the plastic optical fiber according to an embodiment of the present invention is preferred to be 115 dB/km or less, more preferably 100 dB/km or less. To achieve such effects more efficiently, the plastic optical fiber is preferred to be obtained by the manufacturing method according to an embodiment of the present invention.
The plastic optical fiber according to an embodiment of the present invention can be used for long-distance communication because of the reduced level of transmission loss at a wavelength of 525 nm, which is often used for long-distance communication. Thus, the plastic optical fiber is suitable for use in long-distance communication (100 m or longer), for example, in sensors for entry barrier fences at airports, warehouses, etc., solar panels, theft prevention sensors for store displays, security cameras and so on.

Examples

In the following, the present invention is described in detail by referring to the examples. However, the present invention is not limited to the examples.

(Measuring Transmission Loss)

Using wavelengths of 525 nm and 650 nm, transmission losses were determined by a 25 m-1 m cutback method under three different conditions of excitation NA=0.1, 0.45 and 0.65.
Measurement using a 25 m-1 m cutback method was conducted in compliance with "JIS C 6823:2010" specified by Japan Industrial Standards. More specifically, a 25 m plastic optical fiber is set in a measuring device, output power (P2) is measured, the plastic optical fiber is cut to a cutback length (1 m from the end where light enters), and output power (P1) is measured to determine optical transmission loss by using mathematical formula (1) shown above.
In hot-wet treatment, the outermost portion of a plastic optical fiber wound on a bobbin with applied tension and winding length as shown in Table 1 was set as a sample before hot-wet treatment, and its transmission loss was measured. Next, the bobbin was put into a temperature/humidity environmental test chamber (brand name "PR-2KPH" made by Espec Corporation), and the temperature, humidity and time specified in Table 2 were set for conducting hot-wet treatment. Then, the bobbin was placed into a drying oven (brand name "DKN612"made by Yamato Scientific Co., Ltd.) and the temperature and time specified in Table 2 were set for a drying process. The outermost portion of the plastic optical fiber wound on a bobbin was taken as a sample after hot-wet treatment, and its transmission loss was measured.
In hot water treatment, the outermost portion of a plastic optical fiber wound on a bobbin with applied tension and winding length as shown in Table 1 was set as a sample before hot water treatment, and its transmission loss was measured. Next, the bobbin was put into a water bath, and the temperature and time specified in Table 2 were set for conducting hot water treatment. Then, the bobbin was placed into a drying oven (brand name "DKN612" made by Yamato Scientific Co., Ltd.) and the temperature and time specified in Table 2 were set for a drying process. The outermost portion of the plastic optical fiber wound on a bobbin was taken as a sample after hot water treatment, and its transmission loss was measured.

(Material for Plastic Optical Fiber)

Resin A: PMMA (refractive index of 1.492)
Resin B: 17FM/3FM/MMA/MAA copolymer (mass ratio at 30/51/18/1, refractive index of 1.417)
Resin C: 13FM/3FM/MMA/MAA copolymer (mass ratio at 39/41/18/2, refractive index of 1.417)
Resin D: VDF/TFE copolymer (molar ratio at 80/20, refractive index of 1.405)

[Example 1]

Melted resins A, B and D were supplied respectively to a 220°C spinning head so that resin A as the core material, resin B as cladding material for the first layer (inner layer), and resin D as cladding material for the second layer (outer layer) were spun using a concentric triple-layer conjugate spinning nozzle. Next, the fiber was stretched to double its length in a fiber axial direction in a 140°C hot air oven to produce a plastic optical fiber with a diameter of 3 mm having a 5 μm-thick first cladding layer and a 10 μm-thick second cladding layer. Then, 400 m of the plastic optical fiber was wound on a bobbin by applying a tension of 1200 gf (11.8 N). The diameter of the barrel was 190 mm, the length of the barrel (length between the flanges) was 180 mm, and the diameter of the flanges was 300 mm. No holes were formed in the barrel or the flanges of the bobbin. The results of measuring transmission loss in the plastic optical

fiber are shown in Tables 3 and 4.

[Examples 2-16]

Each plastic optical fiber was obtained through the same procedures as in Example 1 except that the manufacturing conditions and processing conditions were changed as shown in Tables 1 and 2. The results of measuring transmission loss in each plastic optical fiber are shown in Tables 3 and 4.

[Example 17]

A plastic optical fiber was obtained through the same procedures as in Example 1 except that a bobbin having circular holes in the barrel portion as shown in Fig. 2 was used and the manufacturing conditions and processing conditions were changed as shown in Tables 1 and 2. The results of measuring transmission loss in the plastic optical fiber are shown in Tables 3 and 4.

[Example 18]

A plastic optical fiber was obtained through the same procedures as in Example 1 except that a bobbin having rectangular holes in the barrel portion as shown in Fig. 3 was used and the manufacturing conditions and processing conditions were changed as shown in Tables 1 and 2. The results of measuring transmission loss in the plastic optical fiber are shown in Tables 3 and 4.

[Example 19]

A plastic optical fiber was obtained through the same procedures as in Example 1 except that a bobbin having fan-shaped holes in the flange portion as shown in Fig. 4 was used and the manufacturing conditions and processing conditions were changed as shown in Tables 1 and 2. The results of measuring transmission loss in the plastic optical fiber are shown in Tables 3 and 4.

[Examples 20-23]

Each plastic optical fiber was obtained through the same procedures as in Example 1 except that the manufacturing conditions and processing conditions were changed as shown in Tables 1 and 2. The results of measuring transmission loss in each plastic optical fiber are shown in Tables 3 and 4.

[Comparative Examples 1~6]

Each plastic optical fiber was obtained through the same procedures as in Example 1 except that the manufacturing conditions and processing conditions were changed as shown in Tables 1 and 2. The results of measuring transmission loss in each plastic optical fiber are shown in Tables 3 and 4.

Table 1

| | Core | | Cladding | | | | | | POF | | |
|---|---|---|---|---|---|---|---|---|---|---|---|
| | | | First Layer | | | Second Layer | | | | | |
| | Core Material | Refractive Index | Cladding Material | Refractive Index | Thickness ($\mu m$) | Cladding Material | Refractive Index | Thickness ($\mu m$) | Diameter (mm) | Tension (gf) | Winding Length (m) |
| Example 1 | A | 1.492 | B | 1.417 | 5 | D | 1.405 | 10 | 3 | 1200 | 400 |
| Example 2 | A | 1.492 | B | 1.417 | 5 | D | 1.405 | 10 | 25 | 1200 | 600 |
| Example 3 | A | 1.492 | B | 1.417 | 5 | D | 1.405 | 10 | 2 | 1200 | 1000 |
| Example 4 | A | 1.492 | B | 1.417 | 5 | D | 1.405 | 10 | 1.5 | 800 | 2000 |
| Example 5 | A | 1.492 | B | 1.417 | 5 | D | 1.405 | 10 | 1 | 500 | 5000 |
| Example 6 | A | 1.492 | B | 1.417 | 4 | D | 1.405 | 8 | 0.75 | 400 | 9000 |
| Example 7 | A | 1.492 | B | 1.417 | 3 | D | 1.405 | 7 | 0.5 | 150 | 16000 |
| Example 8 | A | 1.492 | B | 1.417 | 5 | D | 1.405 | 10 | 1 | 500 | 5000 |
| Example 9 | A | 1.492 | B | 1.417 | 5 | D | 1.405 | 10 | 1 | 500 | 5000 |
| Example 10* | A | 1.492 | B | 1.417 | 5 | D | 1.405 | 10 | 1 | 500 | 5000 |
| Example 11 | A | 1.492 | B | 1.417 | 5 | D | 1.405 | 10 | 1 | 500 | 5000 |
| Example 12 | A | 1.492 | B | 1.417 | 5 | D | 1.405 | 10 | 1 | 500 | 5000 |
| Example 13 | A | 1.492 | B | 1.417 | 5 | D | 1.405 | 10 | 1 | 500 | 5000 |
| Example 14 | A | 1.492 | B | 1.417 | 10 | - | - | - | 1 | 500 | 5000 |
| Example 15 | A | 1.492 | D | 1.405 | 10 | - | - | - | 1 | 500 | 5000 |
| Example 16 | A | 1.492 | C | 1.417 | 5 | D | 1. 405 | 10 | 1 | 500 | 5000 |

(continued)

| | Core | | Cladding | | | | | | POF | | |
|---|---|---|---|---|---|---|---|---|---|---|---|
| | | | First Layer | | | Second Layer | | | | | |
| | Core Material | Refractive Index | Cladding Material | Refractive Index | Thickness (μm) | Cladding Material | Refractive Index | Thickness (μm) | Diameter (mm) | Tension (gf) | Winding Length (m) |
| Example 17 | A | 1.492 | B | 1.417 | 5 | D | 1.405 | 10 | 1 | 500 | 5000 |
| Example 18 | A | 1.492 | B | 1.417 | 5 | D | 1.405 | 10 | 1 | 500 | 5000 |
| Example 19 | A | 1.492 | B | 1.417 | 5 | D | 1.405 | 10 | 1 | 500 | 5000 |
| Example 20 | A | 1.492 | B | 1.417 | 5 | D | 1.405 | 10 | 1 | 500 | 5000 |
| Example 21 | A | 1.492 | B | 1. 417 | 5 | D | 1.405 | 10 | 1 | 500 | 5000 |
| Example 22 | A | 1.492 | B | 1.417 | 5 | D | 1.405 | 10 | 1 | 500 | 5000 |
| Example 23* | A | 1.492 | B | 1.417 | 5 | D | 1.405 | 10 | 1 | 500 | 5000 |
| Comp. Example 1 | A | 1.492 | B | 1.417 | 5 | D | 1. 405 | 10 | 1 | 500 | 5000 |
| Comp. Example 2 | A | 1.492 | B | 1.417 | 10 | - | - | - | 1 | 500 | 5000 |
| Comp. Example 3 | A | 1.492 | D | 1.405 | 10 | - | - | - | 1 | 500 | 5000 |
| Comp. Example 4 | A | 1.492 | B | 1.417 | 5 | D | 1.405 | 10 | 1 | 500 | 5000 |
| Comp. Example 5 | A | 1.492 | B | 1.417 | 5 | D | 1.405 | 10 | 1 | 500 | 5000 |

(continued)

| | Core | | Cladding | | | | | | POF | | |
|---|---|---|---|---|---|---|---|---|---|---|---|
| | | | First Layer | | | Second Layer | | | | | |
| | Core Material | Refractive Index | Cladding Material | Refractive Index | Thickness (μm) | Cladding Material | Refractive Index | Thickness (μm) | Diameter (mm) | Tension (gf) | Winding Length (m) |
| Comp. Example 6 | A | 1.492 | B | 1.417 | 5 | D | 1.405 | 10 | 1 | 500 | 5000 |

* Reference Example

Table 2

| | Hot-Wet Treatment | | | Hot Water Treatment | | Drying Process | |
|---|---|---|---|---|---|---|---|
| | Temperature (°C) | Relative Humidity (%) | Time (hr) | Temperature (°C) | Time (hr) | Temperature (°C) | Time (hr) |
| Example 1 | 50 | 95 | 150 | - | - | 50 | 4 |
| Example 2 | 50 | 95 | 150 | - | - | 50 | 4 |
| Example 3 | 50 | 95 | 150 | - | - | 50 | 4 |
| Example 4 | 50 | 95 | 150 | - | - | 60 | 4 |
| Example 5 | 50 | 95 | 150 | - | - | 50 | 4 |
| Example 6 | 50 | 95 | 150 | - | - | 50 | 4 |
| Example 7 | 50 | 95 | 150 | - | - | 50 | 4 |
| Example 8 | 55 | 95 | 100 | - | - | 40 | 4 |
| Example 9 | 35 | 95 | 1440 | - | - | 50 | 4 |
| Example 10* | 20 | 50 | 4320 | - | - | 50 | 4 |
| Example 11 | 50 | 100 | 150 | - | - | 70 | 4 |
| Example 12 | 50 | 70 | 200 | - | - | 50 | 4 |
| Example 13 | 50 | 40 | 350 | - | - | 50 | 4 |
| Example 14 | 50 | 95 | 150 | - | - | 50 | 4 |
| Example 15 | 50 | 95 | 150 | - | - | 50 | 4 |
| Example 16 | 50 | 95 | 150 | - | - | 50 | 4 |
| Example 17 | 50 | 95 | 75 | - | - | 50 | 4 |
| Example 18 | 50 | 95 | 75 | - | - | 50 | 4 |
| Example 19 | 50 | 95 | 75 | - | - | 30 | 8 |
| Example 20 | 50 | 95 | 150 | - | - | - | - |
| Example 21 | - | - | - | 55 | 24 | 50 | 170 |

(continued)

| | Hot-Wet Treatment | | | Hot Water Treatment | | Drying Process | |
|---|---|---|---|---|---|---|---|
| | Temperature (°C) | Relative Humidity (%) | Time (hr) | Temperature (°C) | Time (hr) | Temperature (°C) | Time (hr) |
| Example 22 | - | - | - | 35 | 72 | 50 | 170 |
| Example 23* | - | - | - | 20 | 170 | 50 | 170 |
| Comp. Example 1 | - | - | - | - | - | - | - |
| Comp. Example 2 | - | - | - | - | - | - | - |
| Comp. Example 3 | - | - | - | - | - | - | - |
| Comp. Example 4 | 60 | 95 | 150 | - | - | 50 | 4 |
| Comp. Example 5 | 50 | 30 | 150 | - | - | 50 | 4 |
| Comp. Example 6 | - | - | - | 60 | 24 | 50 | 170 |
| * Reference Example | | | | | | | |

Table 3

| Wavelength | 525 nm | | 525 nm | | | 525 nm | |
|---|---|---|---|---|---|---|---|
| Excitation | NA=0.1 | | NA=0.45 | | | NA=0.65 | |
| Transmission Loss | Before Treatment (dB/km) | After Treatment (dB/km) | Before Treatment (dB/km) | After Treatment (dB/km) | Reduction Rate (%) | Before Treatment (dB/km) | After Treatment (dB/km) |
| Example 1 | 94 | 82 | 106 | 90 | 15.1 | 115 | 99 |
| Example 2 | 95 | 81 | 106 | 90 | 15.1 | 116 | 100 |
| Example 3 | 94 | 82 | 108 | 90 | 16.7 | 117 | 99 |
| Example 4 | 95 | 83 | 107 | 90 | 15.9 | 115 | 100 |
| Example 5 | 92 | 87 | 118 | 92 | 22.0 | 131 | 100 |
| Example 6 | 110 | 98 | 122 | 100 | 18.0 | 145 | 110 |
| Example 7 | 132 | 109 | 139 | 115 | 17. 3 | 151 | 125 |
| Example 8 | 92 | 87 | 118 | 97 | 17.8 | 131 | 106 |
| Example 9 | 92 | 85 | 118 | 89 | 24.6 | 131 | 102 |
| Example 10* | 92 | 86 | 118 | 91 | 22.9 | 131 | 105 |
| Example 11 | 92 | 84 | 118 | 88 | 25.4 | 131 | 100 |

(continued)

| Transmission Loss | Before Treatment (dB/km) | After Treatment (dB/km) | Before Treatment (dB/km) | After Treatment (dB/km) | Reduction Rate (%) | Before Treatment (dB/km) | After Treatment (dB/km) |
|---|---|---|---|---|---|---|---|
| Example 12 | 92 | 86 | 118 | 96 | 18.6 | 131 | 106 |
| Example 13 | 92 | 89 | 118 | 98 | 16.9 | 131 | 108 |
| Example 14 | 101 | 94 | 128 | 105 | 18.0 | 139 | 111 |
| Example 15 | 106 | 101 | 123 | 113 | 8.1 | 136 | 126 |
| Example 16 | 92 | 85 | 121 | 95 | 21.5 | 134 | 102 |
| Example 17 | 92 | 85 | 118 | 93 | 21.2 | 131 | 100 |
| Example 18 | 92 | 85 | 118 | 93 | 21.2 | 131 | 100 |
| Example 19 | 92 | 86 | 118 | 96 | 18.6 | 131 | 101 |
| Example 20 | 92 | 88 | 118 | 94 | 20.3 | 131 | 103 |
| Example 21 | 92 | 91 | 118 | 108 | 8.5 | 131 | 129 |
| Example 22 | 92 | 92 | 118 | 110 | 6.8 | 131 | 130 |
| Example 23* | 92 | 92 | 118 | 111 | 5.9 | 131 | 130 |
| Comp. Example 1 | 92 | - | 118 | - | - | 131 | - |
| Comp. Example 2 | 101 | - | 128 | - | - | 139 | - |
| Comp. Example 3 | 106 | - | 123 | - | - | 136 | - |
| Comp. Example 4 | 92 | 92 | 118 | 122 | -3. 4 | 131 | 132 |
| Comp. Example 5 | 92 | 92 | 118 | 118 | 0.0 | 131 | 131 |
| Comp. Example 6 | 92 | 105 | 118 | 134 | -13.6 | 131 | 148 |
| * Reference Example | | | | | | | |

Table 4

| Wavelength | 650 nm | | 650 nm | | 650 nm | |
|---|---|---|---|---|---|---|
| Excitation | NA=0.1 | | NA=0.45 | | NA=0.65 | |
| Transmission Loss | Before Treatment (dB/km) | After Treatment (dB/km) | Before Treatment (dB/km) | After Treatment (dB/km) | Before Treatment (dB/km) | After Treatment (dB/km) |
| Example 1 | 123 | 123 | 134 | 131 | 145 | 141 |
| Example 2 | 123 | 123 | 135 | 131 | 146 | 141 |
| Example 3 | 123 | 123 | 136 | 132 | 148 | 142 |
| Example 4 | 124 | 123 | 135 | 131 | 146 | 141 |
| Example 5 | 132 | 130 | 141 | 138 | 154 | 151 |
| Example 6 | 135 | 136 | 146 | 147 | 158 | 160 |

(continued)

| Transmission Loss | Before Treatment (dB/km) | After Treatment (dB/km) | Before Treatment (dB/km) | After Treatment (dB/km) | Before Treatment (dB/km) | After Treatment (dB/km) |
|---|---|---|---|---|---|---|
| Example 7 | 148 | 150 | 158 | 160 | 161 | 168 |
| Example 8 | 132 | 131 | 141 | 138 | 154 | 151 |
| Example 9 | 132 | 130 | 141 | 136 | 154 | 149 |
| Example 10* | 132 | 130 | 141 | 137 | 154 | 150 |
| Example 11 | 132 | 130 | 141 | 135 | 154 | 148 |
| Example 12 | 132 | 131 | 141 | 138 | 154 | 151 |
| Example 13 | 132 | 132 | 141 | 140 | 154 | 153 |
| Example 14 | 133 | 132 | 144 | 141 | 159 | 155 |
| Example 15 | 134 | 133 | 148 | 147 | 163 | 162 |
| Example 16 | 133 | 132 | 142 | 137 | 156 | 150 |
| Example 17 | 132 | 131 | 141 | 138 | 154 | 151 |
| Example 18 | 132 | 131 | 141 | 137 | 154 | 151 |
| Example 19 | 132 | 131 | 141 | 138 | 154 | 151 |
| Example 20 | 132 | 146 | 141 | 159 | 154 | 169 |
| Example 21 | 132 | 132 | 141 | 139 | 154 | 154 |
| Example 22 | 132 | 132 | 141 | 140 | 154 | 154 |
| Example 23* | 132 | 132 | 141 | 141 | 154 | 154 |
| Comp. Example 1 | 132 | - | 141 | - | 154 | - |
| Comp. Example 2 | 133 | - | 144 | - | 159 | - |
| Comp. Example 3 | 134 | - | 148 | - | 163 | - |
| Comp. Example 4 | 132 | 137 | 141 | 151 | 154 | 164 |
| Comp. Example 5 | 132 | 132 | 141 | 141 | 154 | 154 |
| * Reference Example | | | | | | |

The plastic optical fibers in Examples 1~23 obtained respectively by manufacturing methods according to the embodiments of the present invention exhibited a reduction in transmission loss, especially transmission loss at around 525 nm. By contrast, Comparative Examples 4~6, prepared by hot-wet treatment or hot water treatment under conditions different from those employed for the embodiments of the present invention, were unable to reduce transmission loss at around 525 nm. The temperature of the hot-wet treatment was high at 60°C in Comparative Example 4, the humidity of the hot-wet treatment was low at 30%RH in Comparative Example 5, and the temperature of the hot water treatment was high at 60°C in Comparative Example 6.

INDUSTRIAL APPLICABILITY

The plastic optical fibers according to the embodiments of the present invention are capable of reducing transmission loss, especially transmission loss at around 525 nm. Thus, the plastic optical fibers are suitable for use in long-distance communication (100 m or longer), for example, in sensors for entry barrier fences at airports, warehouses, etc.,

solar panels, theft prevention sensors for store displays, security cameras and so on.

DESCRIPTION OF NUMERICAL REFERENCES

| | |
|---|---|
| **11** | core |
| **12** | cladding |
| **12a** | first cladding layer (innermost layer) |
| **12b** | second cladding layer (outer layer) |
| **61** | barrel |
| **62** | flange |
| **63** | hole |
| **63a** | hole (in barrel) |
| **63b** | hole (in flange) |

## Claims

1. A method for manufacturing a plastic optical fiber, comprising:

    a processing step on a plastic optical fiber,
    wherein hot-wet treatment at a relative humidity of 35-100%RH, or hot water treatment, is conducted on a plastic optical fiber,
    processing temperature is set at 30-56°C, and
    processing time is set for 5-5000 hours.

2. The method for manufacturing a plastic optical fiber according to Claim 1, wherein the hot-wet treatment is conducted in the processing step.

3. The method for manufacturing a plastic optical fiber according to Claim 1 or 2, further comprising a drying step after the processing step.

4. The method for manufacturing a plastic optical fiber according to any of Claims 1-3, wherein the diameter of a plastic optical fiber is 0.6 mm or greater.

5. The method for manufacturing a plastic optical fiber according to any of Claims 1-4, wherein a plastic optical fiber comprises a core (11) and at least one layer of cladding (12; 12a; 12b) that surrounds the periphery of the core (11), the material for the core (11) is acrylic resin, and the material for the cladding (12; 12a; 12b) is fluororesin.

6. The method for manufacturing a plastic optical fiber according to Claim 5, wherein a plastic optical fiber comprises two or more layers of cladding (12; 12a; 12b), the material for the innermost cladding layer (12a) that surrounds the periphery of the core (11) is fluororesin containing a fluoroalkyl (meth)acrylate unit, and the material for the outer cladding layer (12b) that surrounds the periphery of the innermost cladding layer (12a) is fluororesin containing a vinylidene fluoride unit.

7. The method for manufacturing a plastic optical fiber according to any of Claims 1-6, wherein the processing step for conducting a hot-wet treatment or hot water treatment is performed on a plastic optical fiber that is wound on a bobbin.

8. The method for manufacturing a plastic optical fiber according to Claim 7, wherein the bobbin comprises a hole (63; 63a; 63b) in the barrel (61) or flange (62) portion.

9. A plastic optical fiber obtained by the manufacturing method according to any of Claims 1-8.

10. The plastic optical fiber according to Claim 9, wherein a reduction rate of 5% or greater is achieved in the levels of transmission loss when measured before and after the processing step of hot-wet treatment or hot water treatment, using a 25 m-1 m cutback method under conditions of a wavelength of 525 nm and excitation NA=0.45.

**11.** The plastic optical fiber according to Claim 9, wherein the transmission loss is 115 dB/km or lower when measured using a 25 m-1 m cutback method under conditions of a wavelength of 525 nm and excitation NA=0.45.

**12.** The plastic optical fiber according to Claim 9, wherein the transmission loss is 100 dB/km or lower when measured using a 25 m-1 m cutback method under conditions of a wavelength of 525 nm and excitation NA=0.45.

**13.** The plastic optical fiber according to any of Claims 9-12, wherein the plastic optical fiber is wound on a bobbin having a hole (63; 63a; 63b) in the barrel (61) or flange (62) portion.

**14.** A sensor comprising the plastic optical fiber according to Claim 9 or 10.

**15.** A sensor comprising the plastic optical fiber according to Claim 11 or 12.

## Patentansprüche

**1.** Verfahren zum Herstellen einer polymeren optischen Faser, umfassend:

einen Prozessierschritt mit einer polymeren optischen Faser,
wobei eine Heiß-Nass-Behandlung bei einer relativen Feuchte von 35-100% RH oder eine Heißwasserbehandlung mit der polymeren optischen Faser durchgeführt wird,
die Prozessiertemperatur auf 30-56°C eingestellt ist, und
die Prozessierzeit auf 5-5000 Stunden eingestellt ist.

**2.** Verfahren zum Herstellen einer polymeren optischen Faser nach Anspruch 1, wobei die Heiß-Nass-Behandlung in dem Prozessierschritt durchgeführt wird.

**3.** Verfahren zum Herstellen einer polymeren optischen Faser nach Anspruch 1 oder 2, ferner einem Trocknungsschritt nach dem Prozessierschritt umfassend.

**4.** Verfahren zum Herstellen einer polymeren optischen Faser nach einem der Ansprüche 1-3, wobei der Durchmesser der polymeren optischen Faser 0,6 mm oder größer ist.

**5.** Verfahren zum Herstellen einer polymeren optischen Faser nach einem der Ansprüche 1-4, wobei eine polymere optische Faser einen Kern (11) und zumindest eine Schicht einer Ummantelung (12; 12a; 12b) umfasst, die die Peripherie des Kerns (11) umgibt, wobei das Material des Kerns (11) Acrylharz ist und das Material der Ummantelung (12; 12a; 12b) Fluorharz ist.

**6.** Verfahren zum Herstellen einer polymeren optischen Faser nach Anspruch 5, wobei eine polymere optische Faser zwei oder mehr Schichten einer Ummantelung (12; 12a; 12b) umfasst, das Material der innersten Mantelschicht (12a), die die Peripherie des Kerns (11) umgibt, Fluorharz ist, das eine Fluoralkyl(meth)acrylateinheit enthält, und das Material der äußeren Mantelschicht (12b), die die Peripherie der innersten Mantelschicht (12a) umgibt, Fluorharz ist, das eine Vinylidenfluorideinheit enthält.

**7.** Verfahren zum Herstellen einer polymeren optischen Faser nach einem der Ansprüche 1-6, wobei der Prozessierschritt zum Durchführen der Heiß-Nass-Behandlung oder der Heißwasserbehandlung mit einer polymeren optischen Faser durchgeführt wird, die auf eine Trommel aufgewickelt ist.

**8.** Verfahren zum Herstellen einer polymeren optischen Faser nach Anspruch 7, wobei die Trommel ein Loch (63; 63a; 63b) in dem Fass- (61) oder dem Flansch- (62) Abschnitt umfasst.

**9.** Polymere optische Faser, die durch das Herstellungsverfahren nach einem der Ansprüche 1-8 erhalten ist.

**10.** Polymere optische Faser nach Anspruch 9, wobei eine Reduktionsrate von 5% oder größer bei den Transmissionsverlustniveaus erzielt wird, wenn vor und nach dem Prozessierschritt der Heiß-Nass-Behandlung oder der Heißwasserbehandlung unter Verwendung eines 25 m-1 m Abdrosselungsverfahrens unter Bedingungen einer Wellenlänge von 525 nm und einer Anregung von NA = 0,45 gemessen wird.

**11.** Polymere optische Faser nach Anspruch 9, wobei der Transmissionsverlust 115 dB/km oder geringer ist, wenn unter Verwendung eines 25 m-1 m Abdrosselungsverfahrens unter Bedingungen einer Wellenlänge von 525 nm und einer Anregung von NA = 0,45 gemessen wird.

**12.** Polymere optische Faser nach Anspruch 9, wobei der Transmissionsverlust 100 dB/km oder geringer ist, wenn unter Verwendung eines 25 m-1 m Abdrosselungsverfahrens unter Bedingungen einer Wellenlänge von 525 nm und einer Anregung von NA = 0,45 gemessen wird.

**13.** Polymere optische Faser nach einem der Ansprüche 9-12, wobei die polymere optische Faser um eine Tonne gewickelt ist, die ein Loch (63; 63a; 63b) in dem Fass- (61) oder dem Flansch- (62) Abschnitt aufweist.

**14.** Sensor umfassend die polymere optische Faser nach Anspruch 9 oder 10.

**15.** Sensor umfassend die polymere optische Faser nach Anspruch 11 oder 12.

**Revendications**

**1.** Procédé de fabrication d'une fibre optique en plastique, comprenant :

une étape de traitement sur une fibre optique en plastique,
dans lequel un traitement chaud-humide à une humidité relative de 35 à 100 % RH, ou un traitement à l'eau chaude, est appliqué sur une fibre optique en plastique,
la température de traitement est définie à 30-56 °C, et
le temps de traitement est défini à 5-5 000 heures.

**2.** Procédé de fabrication d'une fibre optique en plastique selon la revendication 1, dans lequel le traitement chaud-humide est appliqué pendant l'étape de traitement.

**3.** Procédé de fabrication d'une fibre optique en plastique selon la revendication 1 ou 2, comprenant en outre une étape de séchage après l'étape de traitement.

**4.** Procédé de fabrication d'une fibre optique en plastique selon l'une quelconque des revendications 1 à 3, dans lequel le diamètre d'une fibre optique en plastique est de 0,6 mm ou plus.

**5.** Procédé de fabrication d'une fibre optique en plastique selon l'une quelconque des revendications 1 à 4, dans lequel une fibre optique en plastique comprend une âme (11) et au moins une couche de gainage (12 ; 12a ; 12b) qui entoure la périphérie de l'âme (11), le matériau d'âme (11) est une résine acrylique, et le matériau de gainage (12 ; 12a ; 12b) est une résine fluorée.

**6.** Procédé de fabrication d'une fibre optique en plastique selon la revendication 5, dans lequel une fibre optique en plastique comprend deux couches de gainage ou plus (12 ; 12a ; 12b), le matériau de la couche de gainage la plus à l'intérieur (12a) qui entoure la périphérie de l'âme (11) est une résine fluorée contenant un motif (méth)acrylate de fluoroalkyle, et le matériau de la couche de gainage extérieure (12b) qui entoure la périphérie de la couche de gainage la plus à l'intérieur (12a) est une résine fluorée contenant un motif fluorure de vinylidène.

**7.** Procédé de fabrication d'une fibre optique en plastique selon l'une quelconque des revendications 1 à 6, dans lequel l'étape de traitement comprenant un traitement chaud-humide ou un traitement à l'eau chaude est mise en oeuvre sur une fibre optique en plastique qui est enroulée sur une bobine.

**8.** Procédé de fabrication d'une fibre optique en plastique selon la revendication 7, dans lequel la bobine comporte un trou (63 ; 63a ; 63b) dans sa partie cylindre (61) ou une partie de flasque (62).

**9.** Fibre optique en plastique obtenue par le procédé de fabrication selon l'une quelconque des revendications 1 à 8.

**10.** Fibre optique en plastique selon la revendication 9, dans laquelle un taux de réduction de 5 % ou plus est obtenu en termes de perte de transmission quand elle est mesurée avant et après l'étape de traitement comprenant le traitement chaud-humide ou le traitement à l'eau chaude, à l'aide d'une technique de "cutback" de 25 m-1 m dans

les conditions d'une longueur d'onde de 525 nm et d'une excitation NA=0,45.

**11.** Fibre optique en plastique selon la revendication 9, dans laquelle la perte de transmission est de 115 dB/km ou moins quand elle est mesurée à l'aide d'une technique de "cutback" de 25 m-1 m dans les conditions d'une longueur d'onde de 525 nm et d'une excitation NA=0,45.

**12.** Fibre optique en plastique selon la revendication 9, dans laquelle la perte de transmission est de 100 dB/km ou moins quand elle est mesurée à l'aide d'une technique de "cutback" de 25 m-1 m dans les conditions d'une longueur d'onde de 525 nm et d'une excitation NA=0,45.

**13.** Fibre optique en plastique selon l'une quelconque des revendications 9 à 12, dans laquelle la fibre optique en plastique est enroulée sur une bobine comportant un trou (63 ; 63a ; 63b) dans sa partie cylindre (61) ou une partie de flasque (62).

**14.** Capteur comprenant la fibre optique en plastique selon la revendication 9 ou 10.

**15.** Capteur comprenant la fibre optique en plastique selon la revendication 11 ou 12.

Fig.1

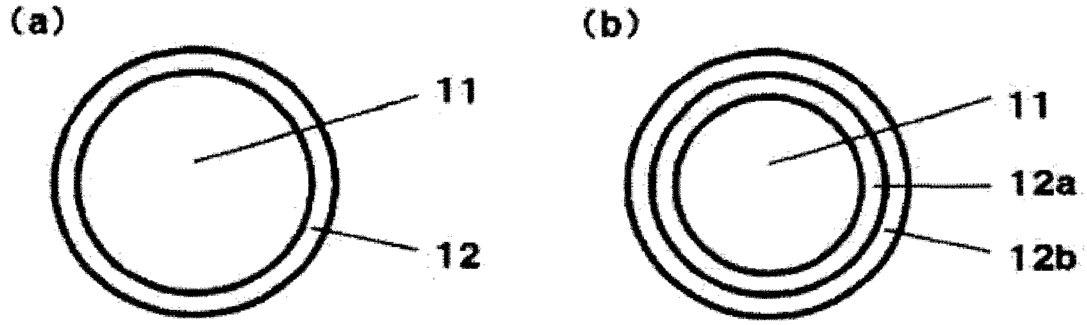


Fig.2

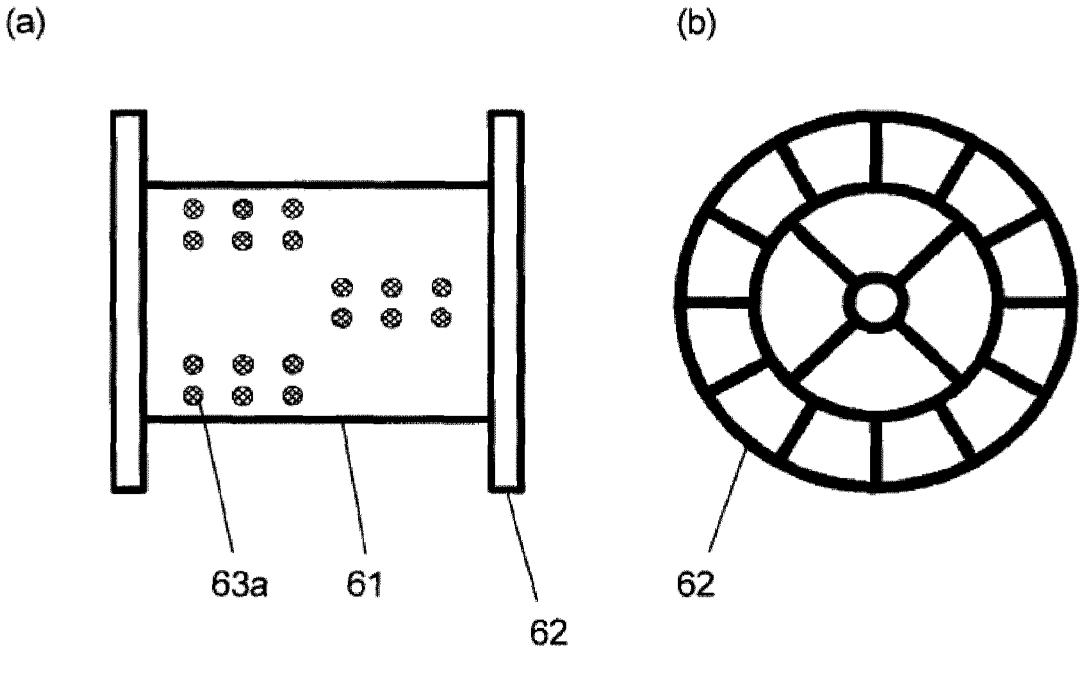

Fig.3

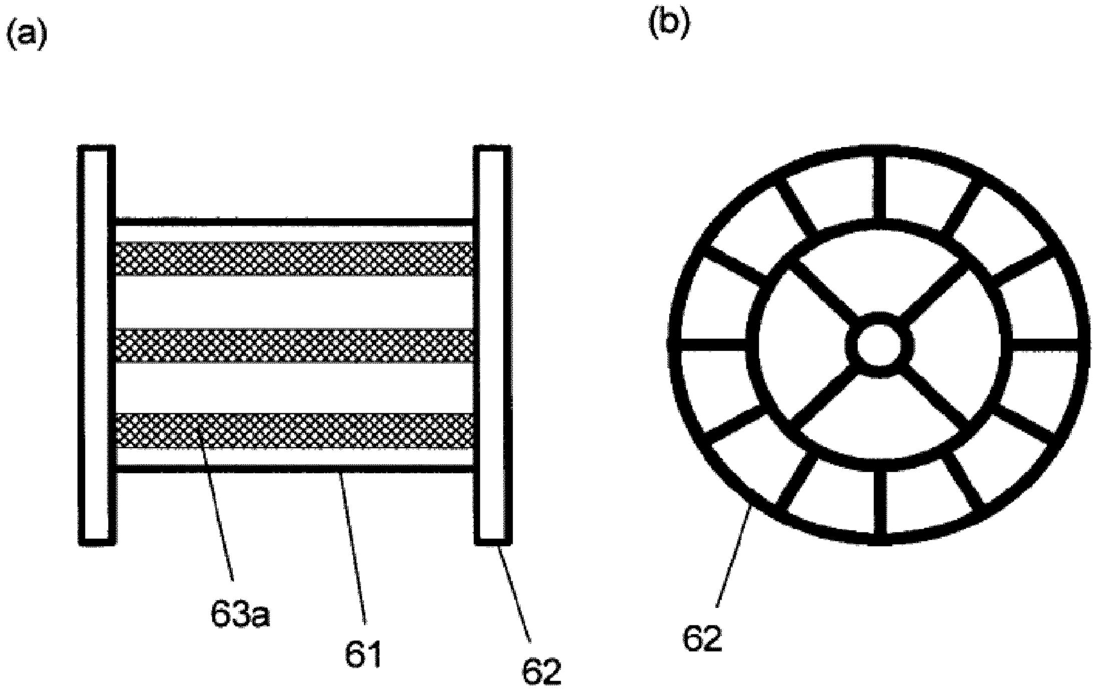


Fig.4

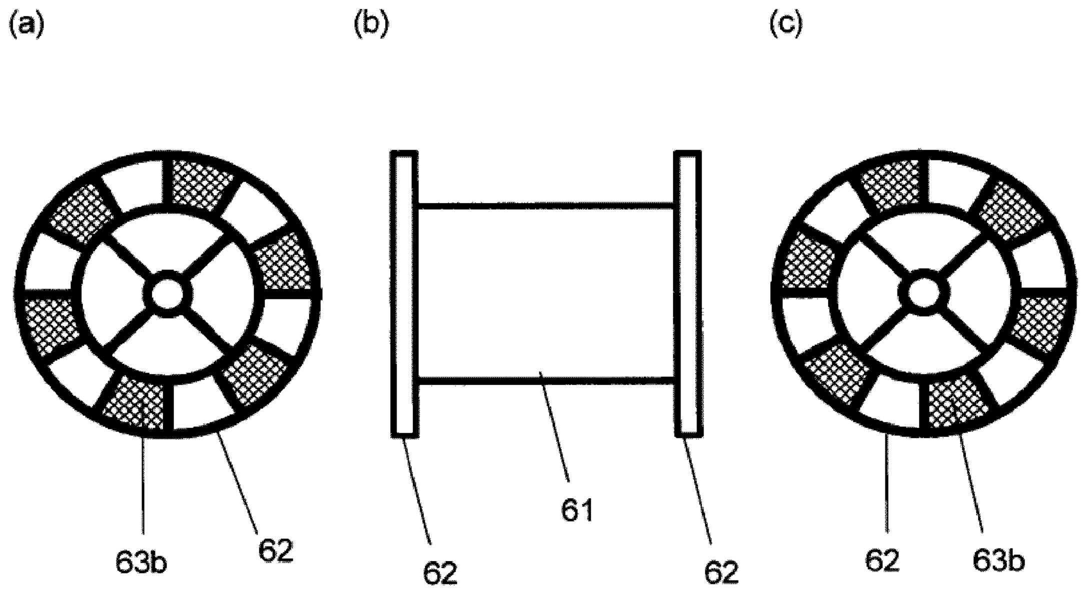

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06118236 A
- JP 2001228343 A
- JP 2005099447 A
- US 2007205526 A1
- JP 2006178220 A
- JP H02208610 A
- JP S63311305 A
- JP 2006058774 A